(19) Europäisches Patentamt
European Patent Office
Office européen des brevets

(11) Veröffentlichungsnummer: **0 313 948 A2**

# (12) EUROPÄISCHE PATENTANMELDUNG

(21) Anmeldenummer: **88117220.9**

(22) Anmeldetag: **17.10.88**

(51) Int. Cl.4: **C08G 65/40 , C08G 75/23**

(30) Priorität: **28.10.87 DE 3736411**

(43) Veröffentlichungstag der Anmeldung:
**03.05.89 Patentblatt 89/18**

(84) Benannte Vertragsstaaten:
**BE DE FR GB IT**

(71) Anmelder: **BAYER AG**
**Konzernverwaltung RP Patentabteilung**
**D-5090 Leverkusen 1 Bayerwerk(DE)**

(72) Erfinder: **Genz, Joachim, Dr.**
**Bodelschwinghstrasse 16**
**D-4150 Krefeld(DE)**
Erfinder: **Dicke, Hans-Rudolf, Dr.**
**Baumhofstrasse 28**
**D-5780 Bestwig(DE)**
Erfinder: **Kleiner, Frank-Gerald, Dr.**
**Am Sonnenhang 62**
**D-5090 Leverkusen 3(DE)**

## (54) Verfahren zur Herstellung von aromatischen Polyethersulfonen.

(57) Die Erfindung betrifft ein Verfahren zur Herstellung aromatischer Polyethersulfone mit hohem Molekulargewicht und hoher Temperaturbeständigkeit sowie guten mechanischen Eigenschaften.

EP 0 313 948 A2

## Verfahren zur Herstellung von aromatischen Polyethersulfonen

Die Erfindung betrifft ein Verfahren zur Herstellung aromatischer Polyethersulfone mit hohem Molekulargewicht und hoher Temperaturbeständigkeit sowie guten mechanischen Eigenschaften.

Aromatische Polyethersulfone sind bekannt. Sie können z.B. durch Umsetzung von 4,4'-Disulfonylchlorid-di-phenylether mit Biphenyl bzw. von 4-Monosulfonylchloriddiphenylether mit sich selbst oder mit 4-Monosulfonylchloridbiphenyl (z.B. GB-PS 1 016 246, 1 106 366, 1 106 367, 1 122 192) hergestellt werden.

Weiterhin können Polyethersulfone durch Umsetzung von aromatischen Dihalogenverbindungen, deren beide Halogenatome durch eine Elektronen anziehende Gruppe aktiviert sind, mit einer äquivalenten Menge eines Alkalimetallsalzes einer aromatischen Dihydroxyverbindung hergestellt werden (z.B. DE-OS 2 038 168).

Als Lösungsmittel werden bei diesen Verfahren polare organische Lösungsmittel wie Nitrile, Sulfone, Ether, Amide usw. eingesetzt.

Die verwendeten Lösemittel sind jedoch unter Reaktionsbedingungen nicht sehr stabil, was z.B. zu unerwünschten Verfärbungen der Produkte führt.

Es wurde nun gefunden, daß bei der Verwendung von N-alkylierten Caprolactamen als Lösemittel bei der Herstellung von aromatischen Polyethersulfonen Produkte mit hohen Molekulargewichten erhalten werden, die farbhell sind.

Gegenstand der Erfindung ist daher ein Verfahren zur Herstellung aromatischer Polyethersulfone mit hohem Molekulargewicht aus Dihydroxyverbindungen und Dihalogensulfonverbindungen, dadurch gekennzeichnet, daß als Lösemittel N-alkylierte Caprolactame der Formel (I),

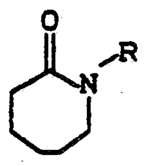

(I),

in welcher

R für $C_1$-$C_5$-Alkyl steht,

verwendet werden.

Beispielsweise können N-Methyl-, N-Ethyl-, N-n-Propyl-, N-Isopropyl-caprolactam usw. eingesetzt werden, vorzugsweise N-Methyl-caprolactam. Es können auch Mischungen eingesetzt werden.

Erfindungsgemäß können hochmolekulare, aromatische Polyethersulfone aus aromatischen Dihydroxyverbindungen und aromatischen Dihalogenverbindungen, welche eine Sulfongruppe enthalten, in Gegenwart einer Alkali-Verbindung oder durch Polykondensation von aromatischen Monohydroxymonohalogen-Verbindungen in Gegenwart von Alkali-Verbindungen in Gegenwart von N-Alkyl-Caprolactamen der Formel (I) als Lösemittel hergestellt werden.

Die erfindungsgemäßen Polykondensationsreaktionen zu Polyethersulfonen können beispielsweise durchgeführt werden, indem entsprechende Mengen einer aromatischen Dihydroxy-Verbindung mit freien Hydroxyl-Gruppen, mit einer aromatischen Dihalogen-Sulfonverbindung in einem N-alkylierten Caprolactam in Gegenwart einer Alkaliverbindung umgesetzt werden (Reaktionstyp 1),

oder indem Monohydroxymonohalogen-Verbindungen mit einer freien Hydroxylgruppe in einem N-alkylierten Caprolactam in Gegenwart einer Alkaliverbindung umgesetzt werden (Reaktionstyp 2),

oder indem Alkalisalze von aromatischen Dihydroxyverbindungen mit aromatischen Dihalogen-Sulfonverbindungen in einem N-alkylierten Caprolactam umgesetzt werden (Reaktionstyp 3),

oder indem Alkalisalze einer Monohydroxymonohalogen-Verbindung in einem N-alkylierten Caprolactam umgesetzt werden (Reaktionstyp 4).

Für die erfindungsgemäßen Reaktionen verwendbare Dihydroxyverbindungen sind divalente Phenole der Formel (II)

HO-Ar-OH (II),

in welcher

Ar  für einen aromatischen $C_6$-$C_{30}$-Rest steht.

Erfindungsgemäß geeignete aromatische Dihydroxyverbindungen der Formel (II) können sein z.B. einkernige divalente Phenole wie Hydrochinon, mehrkernige Dihydroxyverbindungen wie 4,4′-Dihydroxydiphenyl, Bisphenole wie 2,2-Bis-(4-hydroxyphenyl)-propan, Bis-(4-hydroxyphenyl)-methan, 4,4′-Dihydroxybenzophenon, 4,4′-Dihydroxydiphenylether, 4,4′-Dihydroxydiphenylsulfid, 1,4-Bis-(4-hydroxybenzoyl)-benzol und 1,3-Bis-(4-hydroxybenzoyl)-benzol, sowie deren z.B. mit $C_1$-$C_4$-Alkyl, Halogen wie Cl, Br u.s.w. kernsubstituierte Derivate. Sie können allein oder als Gemisch eingesetzt werden. Bevorzugt werden 2,2-Bis-(4-hydroxyphenyl)-propan, 4,4′-Dihydroxydiphenyl, 4,4′-Dihydroxydiphenylether, Hydrochinon, 4,4′-Dihydroxydiphenylsulfon und 4,4′-Dihydroxybenzophenon eingesetzt.

Erfindungsgemäß geeignete aromatische Dihalogen-Sulfonverbindungen sind solche der Formel (III) X-Ar-X  (III),

in welcher

Ar  einen aromatischen $C_6$-$C_{30}$-Rest darstellt, in welchem mindestens eine Sulfon-Gruppe enthalten ist und

X  für Halogen wie F, Cl, Br steht, das in ortho- und/oder para-Position an den jeweils letzten aromatischen Kern angebunden ist.

Erfindungsgemäß geeignete aromatische Dihalogen-Sulfonverbindungen sind z.B. solche der Formeln (IV), (V) oder (VI)

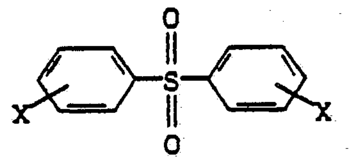

(IV),

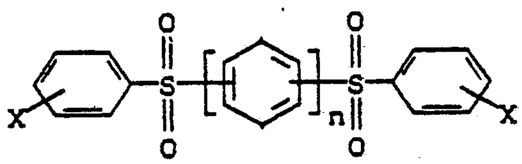

(V),

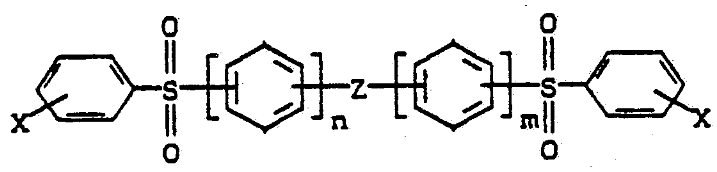

(VI),

in welchen

X  für Halogen wie F, Cl, Br steht, das in ortho- und/oder para-Stellung an den jeweils letzten aromatischen Kern angebunden ist,

Z  für eine Ether-Gruppe, eine Thioether-Gruppe, eine Carbonyl-Gruppe oder eine Sulfon-Gruppe steht, und

m und n für die Zahl 1, 2 und 3 steht.

Halogen in den Formeln (I), (II), (III), (IV), (V) und (VI) der Dihalogen-Sulfonverbindungen sind vorzugsweise Chlor und Fluor.

Erfindungsgemäß geeignete, aromatische Dihalogen-Sulfonverbindungen können beispielsweise 4,4′-Difluordiphenylsulfon, 2,4′-Difluordiphenylsulfon, 4,4′-Dichlordiphenylsulfon, 2,4′-Dichlordiphenylsulfon, Bis-1,4-(4′-fluor-1′-sulfonylphenylen)-benzol, Bis-1,4-(4′-chlor-1′-sulfonylphenylen)-benzol, Bis-1,3-(4′-chlor-1′-sulfonylphenylen)-benzol, Bis-4,4′-(4″-fluor-1″-sulfonylphenylen)-biphenyl, Bis-4,4′-(4″-chlor-1″-sulfonylphenylen)-biphenyl, Bis-4,4′-(4″-fluor-1″-sulfonylphenylen)-di-phenylether und Bis-4,4′-(4″-chlor-1″-sulfonylphenylen)-diphenylether sein. Die Dihalogen-Sulfonverbindungen können allein oder als Gemisch eingesetzt werden.

Von den Dihalogen-Sulfonverbindungen der Formel (III) sind die bevorzugt, die ein Halogenatom in para-Position am jeweilig letzten aromatischen Kern tragen. Die aroma tischen Polyethersulfone zeichnen

sich z.B. durch hohe thermische Stabilität aus.

Besonders bevorzugt wird als aromatische Dihalogen-Sulfonverbindung 4,4′-Dichlordiphenylsulfon eingesetzt.

Erfindungsgemäß geeignete Monohydroxymonohalogen-Verbindungen sind solche der Formel (VII)

X-Ar-OH (VII),

in welcher

Ar und X die bei Formel (III) angegebene Bedeutung haben.

Anstelle der Verbindungen mit freien Hydroxyl-Gruppen können ebenso die Alkali-Salze der entsprechenden Verbindungen eingesetzt werden.

Erfindungsgemäß geeignete Monohydroxymonohalogen-Verbindungen können beispielsweise 4-Fluor-4′-hydroxydiphenylsulfon, 4-Chlor-4′-hydroxydiphenylsulfon, 4-Chlor-4′-hydroxydiphenylsulfon, 4-(4-Fluor-1-sulfonylphenylen)_4′-hydroxybiphenyl, 4-(4-Chlor-1-sulfonylphenylen)-4′-hydroxybiphenyl, 4-(4-Fluor-1-sulfonylphenylen)-4′-hydroxydiphenylether, 4-(4-Chlor-1-sulfonylphenylen)-4′-hydroxydiphenylether, sowie deren entsprechenden Alkalimetall(z.B. Na, K)-Salze sein.

Die Monohydroxymonohalogen-Verbindungen können allein oder als Mischung eingesetzt werden. Ihre Alkalimetall-Salze können nach üblichen Verfahren erhalten werden, beispielsweise durch Umsetzung der freien Hydroxylgruppen der Verbindungen der Formel (VII) mit Alkalimetallhydroxiden.

Bevorzugt steht in der Formel (VII) X für Cl.

Bevorzugt wird als Monohydroxymonohalogen-Verbindung 4-Chlor-4′-hydroxydiphenylsulfon bzw. das Alkalimetallsalz (Na-, Ka-Salz).

Der Vorteil des erfindungsgemäßen Verfahrens liegt darin, daß Produkte mit hohen Molekulargewichten, ausgezeichneter Farbe und hoher thermischer Stabilität erhalten werden.

Die erfindungsgemäße Reaktion einer aromatischen Dihydroxyverbindung mit einer aromatischen Dihalogen-Sulfonverbindung oder die Reaktion einer Monohydroxymonohalogen-Sulfonverbindung mit jeweils freien Hydroxylgruppen zu aromatischen Polyethersulfonen kann in Gegenwart einer Alkalimetallverbindung durchgeführt werden.

Wird die Reaktion mit den Alkalimetallsalzen der Hydroxylgruppen durchgeführt, so kann die Gegenwart einer zusätzlichen Alkalimetallverbindung unterbleiben.

Fur die Umsetzung geeignete Alkalimetallverbindungen sind beispielsweise Hydroxide, Carbonate, Bicarbonate, Fluoride, Hydride, Alkoxide und Alkylate von Alkalimetallen. Bevorzugte Alkalimetallverbindungen sind Carbonate und Bicarbonate. Bevorzugtes Alkalimetall ist Kalium.

Die Umsetzung von aromatischen Dihydroxyverbindungen der Formel (II) mit aromatischen Dihalogen-Sulfonverbindungen der Formel (III) sowie die Umsetzung von aromatischen Monohydroxymonohalogen-Verbindungen der Formel (VII) mit jeweils freien Hydroxylgruppen zu aromatischen Polyethersulfonen (Reaktionstyp 1) wird durchgeführt, indem man die Reaktionskomponenten in Gegenwart der Alkalimetallverbindung in dem Lösemittel der Formel (I) löst, die Reaktionsmischung allmählich auf ca. 120°-150°C aufheizt, bei dieser Temperatur durch ein zugesetztes azeotropes Schleppmittel (z.B. Toluol) gebildetes Reaktionswasser entfernt, anschließend das azeotrope Schleppmittel durch Reaktionstemperaturerhöhung destillativ entfernt und schließlich auf Reaktionstemperaturen von 150°C-400°C, gegebenenfalls unter Druck bis zu 10 bar, aufheizt. Das aromatische Polyethersulfon entsteht nach dieser Verfahrensweise innerhalb von 0,1 h - 24 h in hoher Ausbeute ()90%). Für die Erzielung hoher Molekulargewichte sollten etwa äquimolare Mengen der Reaktionskomponenten eingesetzt werden.

Fur eine Herstellung von Produkten mit niedrigen Molekulargewichten kann es zweckmäßig sein, eine der Reaktionskomponenten im Überschuß (bis zu ca. 2 molar) einzusetzen.

Für die Umsetzung von freie Hydroxylgruppen tragenden aromatischen Dihydroxyverbindungen mit aromatischen Dihalogen-Sulfonverbindungen, sowie zur Umsetzung von freie Hydroxylgruppen tragenden Monohydroxymonohalogen-Sulfonverbindungen zu aromatischen Polyethersulfonen sollen die Alkalimetallverbindungen in etwa äquivalenter Menge eingesetzt werden. Bevorzugt werden ,1,0 - 1,2 Val Alkalimetallverbindungen pro Val freier Hydroxylgruppe eingesetzt.

Als azeotropes Schleppmittel können Verbindungen eingesetzt werden, die mit Wasser ein Azeotrop bilden und einen niedrigeren Siedepunkt besitzen als das erfindungsgemäße Lösemittel der Formel (I), beispielsweise Benzol, Toluol, Xylol usw., bevorzugt Toluol.

Die Umsetzung von Alkalimetallsalzen der freien Hydroxylgruppen der aromatischen Dihydroxyverbindungen mit aromatischen Dihalogen-Sulfonverbindungen, sowie die Umsetzung der Alkalimetallsalze der freien Hydroxylgruppen der Monohydroxymonohalogen-Sulfonverbindungen (Reaktionstyp 2) zu aromatischen Polyethersulfonen geschieht in analoger Weise wie die Umsetzung der Reaktionskomponenten mit

freien Hydroxylgruppen. In diesem Fall kann der Zusatz einer weiteren Alkalimetallverbindung und die Zugabe eines azeotropen Schleppmittels entfallen.

Aromatische Polyethersulfone können nach dem erfindungsgemäßen Verfahren in beliebiger Weise nach den genannten Reaktionstypen 1, 2, 3 oder 4 bei Reaktionstemperaturen von 100°-400°C innerhalb 0,1 h - 24 h erhalten werden.

Bevorzugte Reaktionstemperaturen sind 150°-280°C, bevorzugte Reaktionszeiten 0,5 h - 4 h.

Die erfindungsgemäß hergestellten aromatischen Polyethersulfone haben hohe Molekulargewichte und eine relative Viskosität von 1,12 - 1,5 (gemessen in Dichlormethan).

Die nach dem erfindungsgemäßen Verfahren hergestellten Polyethersulfone können als Formkörper, Filme, Fasern oder Oberflächenbeschichtungen verwendet werden. Sie können in Form von Blends mit anderen Polymeren verwendet oder mit Füllstoffen, wie z.B. Glasfasern, Kohlefasern, Aramid-Fasern, Calciumcarbonat, Calciumsilicat usw. versetzt werden.

## Beispiele:

### Beispiel 1

In einem 3000 ml Dreihalsrundkolben, versehen mit einem Glasrührer und einem Wasserabscheider mit Rückflußkühler sowie einem Thermometer werden 1,0 Mol 4,4′-Dichlordiphenylsulfon, 1,0 Mol 2,2-Bis-(4-hydroxyphenyl)-propan, 1200 ml N-Methylcaprolactam, 360 ml Toluol und 1,2 Mol $K_2CO_3$ vorgelegt. Die Reaktionsmischung wird unter Rühren aufgeheizt, bis bei einer Innentemperatur von max. 150°C das entstehende Reaktionswasser vollständig entfernt ist. Dieser Vorgang kann 1 bis 5 Stunden dauern. Nach vollständigem Entfernen des Reaktionswassers wird auf ca. 230°C aufgeheizt, dabei das Schleppmittel, z.B Toluol, destillativ entfernt und für ca. 90 Minuten weitergerührt.

Zwecks Koagulation des entstandenen Polymeren wird die noch heiße Reaktionsmischung in einer 10 %igen wäßrigen Phosphorsäurelösung gefällt, anschließend das pulvrig ausgefallene Polymer abfiltriert und mehrmals in Wasser aufgeschlämmt, bis es elektrolytfrei ist. Zur Entfernung eventuell vorhandener Restlösemittelmengen wird anschließend mit Methanol aufgekocht, abfiltriert und getrocknet. Die Ausbeute beträgt mehr als 93 % der Theorie.

Vom getrockneten Produkt wird in Dichlormethan in einer Konzentration von 1 g/100 ml die relative Viskosität bestimmt. Sie beträgt $\eta_{rel}$ = 1.232.

Mit Hilfe eines DSC-Meßgerätes der Firma Mettler vom Typ "Mettler TA 3000" wird die Lage des Glasübergangspunktes ermittelt. Er beträgt $T_g$ = 191°C.

Das durch Fällung erhaltene Polymerpulver ist reinweiß.

### Beispiel 2

In einem 3000 ml Dreihalsrundkolben, versehen mit Glasrührer, Wasserabscheider mit Rückflußkühler und Thermometer werden 1,0 Mol 4,4′-Dichlordiphenylsulfon, 1,0 Mol 4,4′-Dihydroxydiphenylsulfon, 1200 ml N-Methylcaprolactam, 360 ml Toluol und 1,2 Mol $K_2CO_3$ vorgelegt. Das Reaktionsverfahren läuft analog zum Beispiel 1 ab.

Die relative Viskosität des erhaltenen, weißen Polymers beträgt $\eta_{rel}$ = 1.188, die Glasübergangstemperatur liegt bei $T_g$ = 215°C.

### Beispiel 3

Beispiel 1 wird wiederholt. Anstelle des 2,2-Bis-(4-hydroxyphenyl)-propan wird jedoch 4,4′-Dihydroxydiphenyl eingesetzt. Das erhaltene, weiße Polymer zeigt einen Glasübergangspunkt von $T_g$ = 181°C. Die relative Viskosität beträgt $\eta_{rel}$ = 1.185.

### Beispiel 4

Es wird entsprechend Beispiel 1 verfahren, als Dihydroxyverbindung wird jedoch Hydrochinon eingesetzt.

Es wird ein weißes Polymer erhalten, welches eine Glasübergangstemperatur von $T_g$ = 209 °C zeigt und eine relative Viskosität von $\eta_{rel}$ = 1.133 besitzt.

Beispiel 5

Beispiel 1 wird wiederholt, als Dihydroxykomponente wird jedoch 2,6-Dihydroxynaphthalin eingesetzt. Das erhaltene, weiße Polymer besitzt eine relative Viskosität von $\eta_{rel}$ = 1.185 und eine Glasübergangstemperatur von $T_g$ = 216 °C.

Beispiel 6

Beispiel 1 wird mit 4,4′-Dihydroxydiphenylether als Dihydroxykomponente wiederholt. Ein ebenfalls weißes Polymerpulver wird isoliert. Das erhaltene Polyethersulfon besitzt eine relative Viskosität von $\eta_{rel}$ = 1.766 und zeigt eine Glasübergangstemperatur von 185 °C.

Beispiel 7

Beispiel 1 wird mit 4,4′-Dihydroxybenzophenon als Dihydroxykomponente wiederholt. Das erhaltene, ebenfalls weiße Polymerpulver zeigt eine Glasübergangstemperatur von 177 °C und besitzt eine relative Viskosität von $\eta_{rel}$ = 1.126.

Vergleichsbeispiel A

In eine Apparatur gemäß Beispiel 1 werden 1,0 Mol 4,4′-Dichlordiphenylsulfon, 1,0 Mol 4,4′-Dihydroxydiphenylsulfen, 1200 ml N-Methylpyrrolidon, 360 ml Toluol und 1,2 Mol $K_2CO_3$ vorgelegt. Die Reaktionsmischung wird unter Rühren aufgeheizt, bis bei Temperaturen von max. 150 °C das Reaktionswasser vollständig entfernt ist. Danach wird auf ca. 185 °C aufgeheizt, dabei das Schleppmittel destillativ entfernt und für ca. 8 Stunden weitergerührt.

Die Aufarbeitung erfolgt analog zu Beispiel 1.

Es wird ein grau gefärbtes Polymer mit einer relativen Viskosität von 1.088 erhalten.

Vergleichsbeispiel B

Der Versuch gemäß Vergleichsbeispiel A wird wiederholt, es wird jedoch 2,2-Bis-(4-hydroxyphenyl)-propan als Bisphenol-Komponente eingesetzt. Zudem wird eine Reaktionstemperatur von 160 °C eingestellt. Die Nachrührzeit beträgt ca. 14 Stunden. die Farbe des erhaltenen Produktes ist leicht grau, die relative Viskosität liegt bei 1.279.

Vergleichsbeispiel C

Vergleichsbeispiel B wird wiederholt. Anstelle des N-Methylpyrrolidon wird jedoch 1,3-Dimethyl-2-imidazolidon als dipolar, aprotisches Lösemittel eingesetzt. Die eingestellte Reaktionstemperatur beträgt 180 °C. Nach 14 Stunden Reaktionszeit wird ein gelbes Polymer mit einer relativen Viskosität von 1.147 erhalten.

**Ansprüche**

1. Verfahren zur Herstellung aromatischer Polyethersulfone mit hohem Molekulargewicht aus Dihydroxyverbindungen und Dihalogensufonverbindungen, dadurch gekennzeichnet, daß als Lösemittel N-alkylierte Caprolactame der Formel (I),

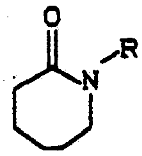

(I),

in welcher
R für $C_1$-$C_5$-Alkyl steht,
verwendet werden.

2. Verfahren nach Anspruch 1, dadurch gekennzeichnet, daß als Dihydroxyverbindungen divalente Phenole der Formel (II)

HO-Ar-OH (II),

in welcher
Ar für einen aromatischen $C_6$-$C_{30}$-Rest steht, verwendet werden.

3. Verfahren nach Anspruch 1, dadurch gekennzeichnet, daß als aromatischer Dihalogensulfonverbindungen solche der Formel (III)

X-Ar-X (III),

in welcher
Ar einen aromatischen $C_6$-$C_{30}$-Rest darstellt, in welchem mindestens eine Sulfon-Gruppe enthalten ist und
X für Halogen wie F, Cl, Br steht, das in ortho-und/oder para-Position an den jeweils letzten aromatischen Kern angebunden ist, verwendet werden.

4. Polyethersulfone, hergestellt nach Anspruch 1.

5. Verwendung der nach Anspruch 1 synthetisierten Polyethersulfone zur Herstellung von Formkörpern, Filamenten, Fasern und Folien.